# EUROPEAN PATENT APPLICATION

(11) **EP 2 930 001 A1**
(43) Date of publication of application: **14.10.2015**
(21) Application number: 14275081.9
(22) Date of filing: 08.04.2014
(51) Int. Cl.: B29C 35/02

(54) **Mould tool and method of curing**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed is a mould tool (4) for use in a process of curing an object made of a composite material. The mould tool (4) comprises: a tool body (6) having a first surface (8) and a second surface (12), the first surface (8) being a mould surface for receiving an object to be cured, the second surface (12) being a different surface to the first surface (8); and a plurality of receiving elements (14) attached to the second surface (12) in a spaced apart arrangement, each receiving element (14) being configured to receive one or more temperature sensors (16, 30).

## Description

### FIELD OF THE INVENTION

The present invention relates to mould tools such as those for use in processes of curing objects made of composite materials.

### BACKGROUND

The external skins of many aircraft are formed from a number of panels made of a composite material.

The composite material may be a polymer matrix reinforced with fibres such as carbon or glass fibres. Honeycomb core is often sandwiched between composite sheets to provide stiff honeycomb core sandwich panels having high strength.

To form a honeycomb core sandwich panel, conventionally, a composite outer skin, e.g. comprising "prepreg" sheets (i.e. "pre-impregnated" composite fibres including a matrix material such as epoxy), is laid against an upper surface of a mould tool, and a honeycomb core is laid over that outer composite skin. A composite inner skin, e.g. comprising prepreg sheets, is then arranged over the honeycomb core. The three layers are then "bagged" and heated. Under the effect of heat, the resin polymerizes, permitting the fibre reinforcement to preserve the shape of the mould tool against which it is forced. The formed panel is removed from the mould tool after being allowed to cool.

Conventionally, temperature sensors are attached directly to the item being formed to ensure that the item experiences a predetermined heat for a predetermined duration so as to ensure that the resin is fully polymerised.

In some prior art processes, caul plates are used to exert pressure on the item being cured, e.g. along the inner mould line of the composite inner skin. However, many caul plates cause unwanted deformation, e.g. indentations, of the item being cured.

### SUMMARY OF THE INVENTION

The present inventors have realised that it is desirable to avoid attaching temperature sensors directly to the item being cured. This reduces a risk of damage to the cured item caused by removing the attached temperature sensors.

In a first aspect, the present invention provides a mould tool for use in a process of curing an object made of a composite material, the mould tool comprising: a tool body having a first surface and a second surface, the first surface being a mould surface for receiving an object to be cured, the second surface being a different surface to the first surface; and a plurality of receiving elements attached to the second surface in a spaced apart arrangement, each receiving element being configured to receive one or more temperature sensors.

The first surface may be opposite to the second surface.

Each of the receiving elements may be an elongate member attached a first end to the second surface of the tool body and extending away from the tool body.

Each of the receiving elements may include a threaded portion for receiving a nut.

The receiving elements may be substantially uniformly spaced apart from one another on the second surface.

The location on the second surface of at least one of receiving elements may correspond to, when the object to be cured is placed on the first surface, the location on the first surface of a predetermined feature of the object to be cured.

The one or more predetermined features of the object to be cured may include one or more feature selected from the group of features consisting of: the thinnest part of the object to be cured, and the thickest part of the object to be cured.

The mould tool may further comprise a bore through the tool body from a location at or proximate to the first surface to a third surface of the tool body. The third surface may be different to the first surface.

The mould tool may further comprise a non-permeable membrane attached to the tool body in such a way that a chamber between the first surface of the tool body and the membrane is provided.

The tool body may have substantially the same thermal expansion properties as the object to be cured.

In a further aspect, the present invention provides an assembly comprising a mould tool according to the preceding aspect, and one or more temperature sensors attached to one or more of the receiving elements.

The assembly may further comprise one or more items located on the first surface of the mould tool, each item comprising one or more further temperature sensors.

The assembly may further comprise an object to be cured located on the first surface of the mould tool.

The assembly may further comprise a caul plate placed onto the object to be cured. The caul plate may comprise a first portion and a second portion. The first portion may be a relatively rigid member having a first caul plate surface for placing against the surface of the object during curing of the object, a second caul plate surface opposite to the first caul plate surface, and sides separating the first and second caul plate surfaces and contiguous with the first and second caul plate surfaces. The second portion may be a relatively flexible member attached to the first portion along at least part of at least one of the sides of the first portion. The second portion may be tapered such that the thickness of the proximal part of the second portion is greater than the thickness of the distal part of the second portion.

In a further aspect, the present invention provides a method of providing a mould tool for use in a process of curing an object made of a composite material, the method comprising: providing a tool body having a first surface and a second surface, the first surface being a mould surface for receiving an object to be cured, the second surface being a different surface to the first surface; and attaching, to the second surface in a spaced apart arrangement, a plurality of receiving elements, each receiving element being configured to receive one or more temperature sensors.

### BRIEF DESCRIPTION OF THE DRAWINGS

Figure 1 is a schematic illustration (not to scale) of an example of an aircraft panel;
Figure 2 is a process flow chart showing certain steps of an embodiment of a production process used to produce the aircraft panel;
Figure 3 is a schematic illustration (not to scale) showing a side view of a mould tool;
Figure 4 is a schematic illustration (not to scale) showing a bottom-up view of the mould tool;
Figure 5 is a process flow chart showing certain steps of a thermo-calibration process;
Figure 6 is a schematic illustration (not to scale) showing the mould tool during a stage of the thermo-calibration process;
Figure 7 is a process flow chart showing certain steps of an aircraft panel moulding process;
Figure 8 is a schematic illustration (not to scale) showing the mould tool during a stage of the aircraft panel moulding process;
Figure 9 is a schematic illustration (not to scale) showing side view cross section of a caul plate; and
Figure 10 is a schematic illustration (not to scale) showing a top down view the caul plate.

### DETAILED DESCRIPTION

In the following description, like reference numerals refer to like elements.

The following description is based on embodiments of the invention and should not be taken as limiting the invention with regard to alternative embodiments that are not explicitly described herein.

It will be appreciated that relative terms such as top and bottom, upper and lower, and so on, are used merely for ease of reference to the Figures, and these terms are not limiting as such, and any two differing directions or positions and so on may be implemented.

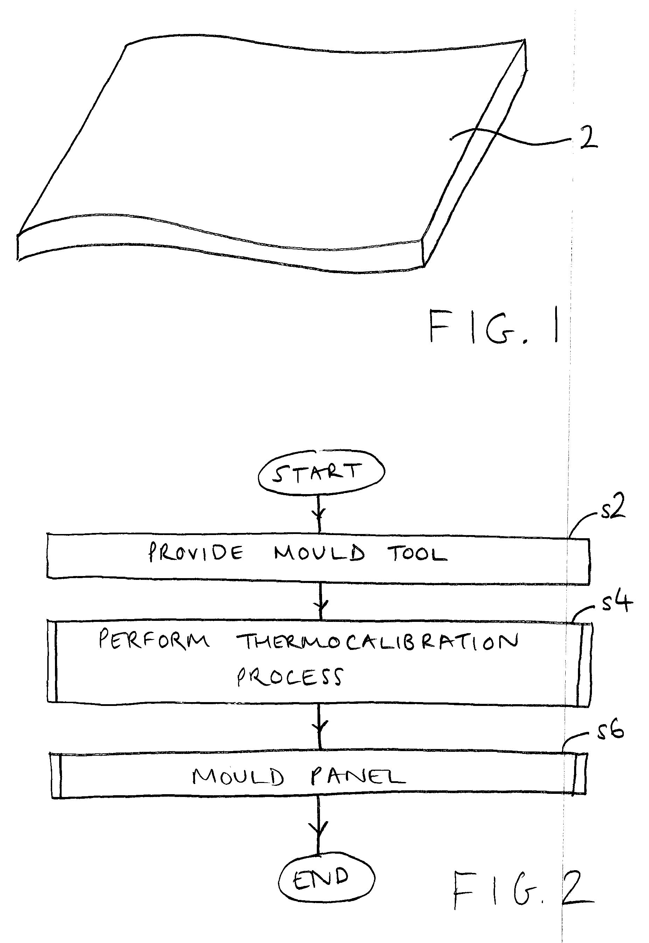

Figure 1 is a schematic illustration (not to scale) of an example of an aircraft panel 2 to be produced using a production process. An embodiment of the production process is described in more detail later below with reference to Figure 2.

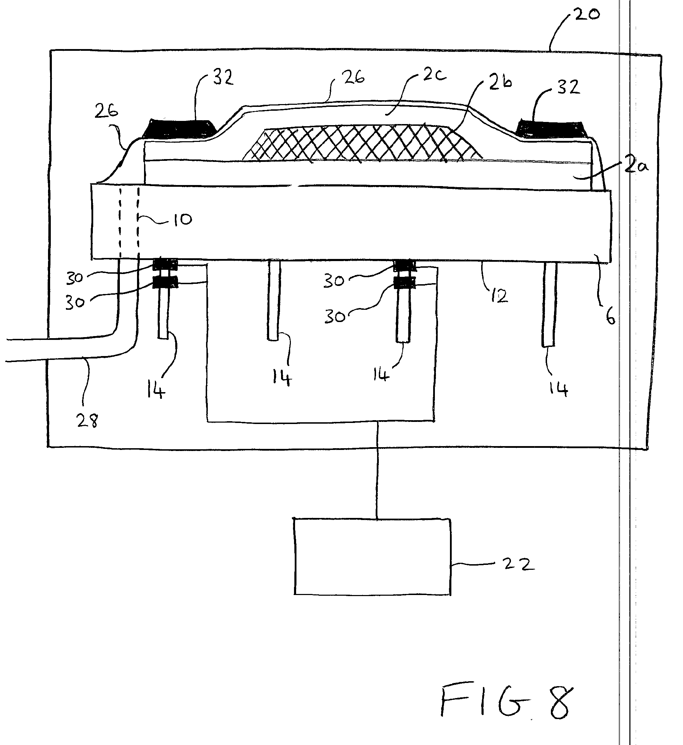

The aircraft panel 2 is made of a composite material in particular a carbon fibre-reinforced polymer, i.e. a polymer matrix reinforced with carbon fibres. In this embodiment, the aircraft panel 2 comprises a honeycomb core sandwiched between two skins as described in more detail later below with reference to Figure 8.

The aircraft panel 2 is shaped such that it conforms with, and may be attached to (e.g. by bolting), an external airframe or substructure of an aircraft so as to form the aircraft outer skin. The aircraft panel 2 may be of any appropriate size.

Figure 2 is a process flow chart showing certain steps of an embodiment of a production process used to produce the aircraft panel 2.

At step s2, a mould tool is provided.

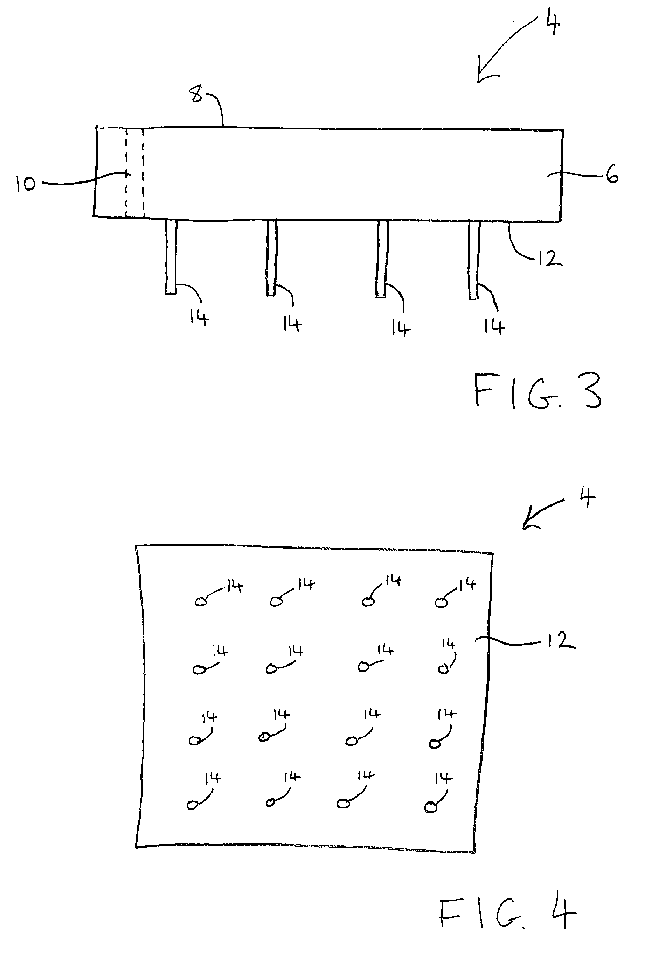

Figure 3 is a schematic illustration (not to scale) showing a side view of the mould tool 4 used in this embodiment.

In this embodiment the mould tool 4 comprises a rigid support structure 6. An upper surface 8 of the support structure is a mould surface that defines the shape of the aircraft panel 2 as described in more detail later below. The upper surface 8 of the mould tool 4 has a contour that substantially matches the outer surface of the item to be formed, i.e., the aircraft panel 2. This outer surface of the item to be formed is often referred to as the "outer mould line".

The support structure 6 comprises a through bore 10 that passes through the body of the support structure 6 from the upper surface 8 to a lower surface 12, the lower surface 12 being opposite to the upper surface 8.

In this embodiment, the support structure 6 is made of metal, for example, steel or aluminium. Preferably, the support structure 6 has the same thermo-expansion properties as the composite material from which the aircraft panel 2 is made.

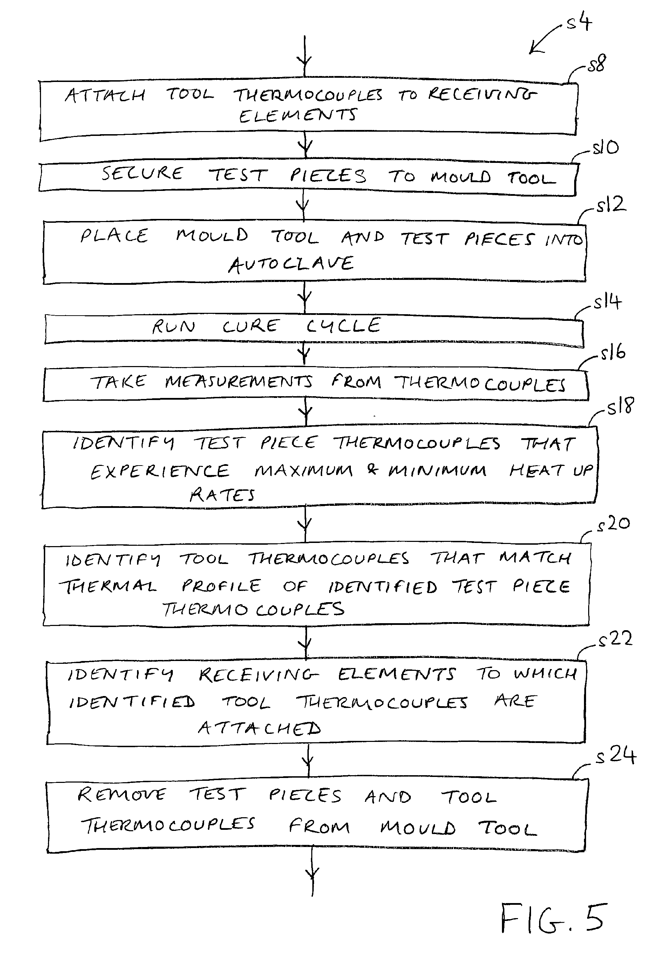

In this embodiment, the mould tool 4 further comprises a plurality of spaced-apart receiving members 14. The receiving members 14 are attached to the lower surface 12 of the support structure 6. Each receiving element 14 is an elongate metal member, attached (e.g. by welding) at one end to the lower surface 12 of the support structure 6 and extending away from the support structure 6 to free end opposite to the first end. In this embodiment, each of the receiving elements 14 is threaded such that a nut can be screwed onto that receiving element 14. Each of the receiving elements 14 is configured to receive a respective thermocouple as described in more detail later below with reference to Figure 5.

Figure 4 is a schematic illustration (not to scale) showing a bottom-up view of the mould tool 4. In this embodiment, the receiving elements 14 are substantially uniformly spaced apart over the lower surface 12.

Returning to the process of Figure 2, at step s4, a thermo-calibration process is provided.

The thermo-calibration process is described in more detail later below with reference to Figure 5.

At step s6, using results from the thermo-calibration process, an aircraft panel moulding process is performed to produce the aircraft panel 2.

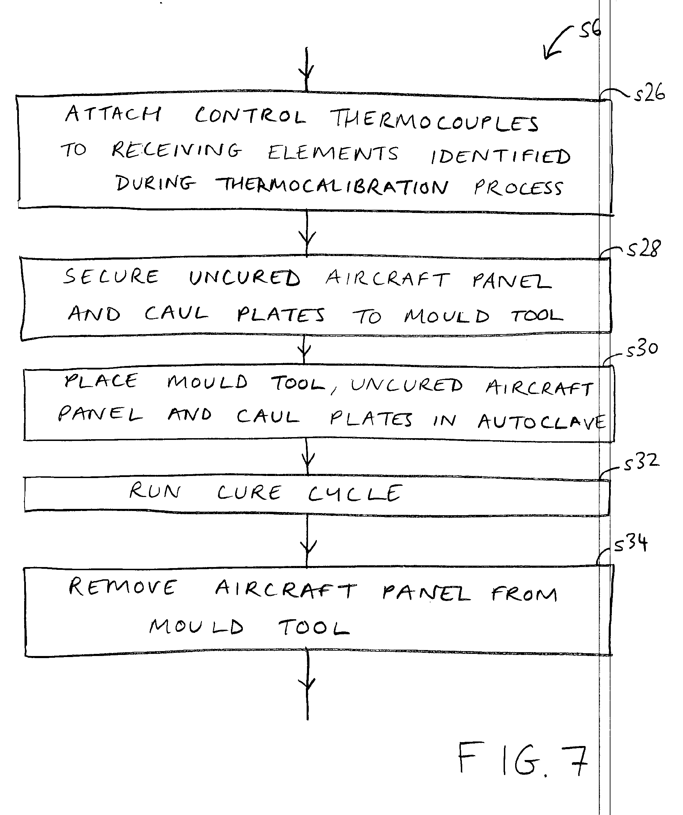

The aircraft panel moulding process is described in more detail later below with reference to Figure 7.

Thus, a production process is provided.

Returning now to the description of step s4 of the production process, Figure 5 is a process flow chart showing certain steps of the thermo-calibration process performed at s4.

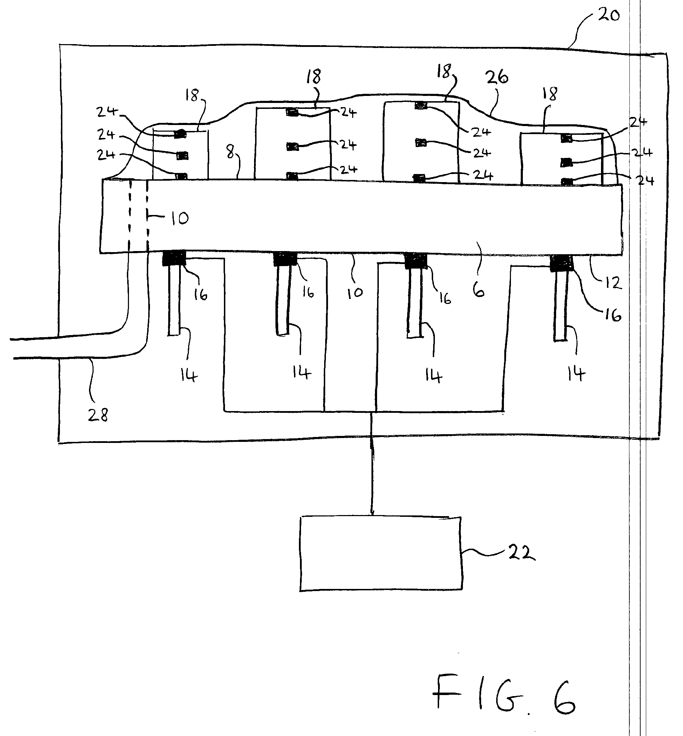

At step s8, a respective thermocouple is secured to each of the receiving elements 14. The thermocouples that are attached to the receiving elements 14 are hereinafter referred to as "tool thermocouples". The attachment of the tool thermocouples to the receiving elements 14 is described in more detail later below with reference to Figure 6.

At step s10, a plurality of test pieces is secured to the upper surface 8 of the mould tool 4. The test pieces and the securing of the test pieces to the mould tools 4 is described in more detail later below with reference to Figure 6.

At step s12, the mould tool 4 with the tool thermocouples and test pieces attached thereto are placed into an autoclave.

Figure 6 is a schematic illustration (not to scale) showing the mould tool 4 with the tool thermocouples 16 and test pieces 18 attached thereto in the autoclave 20.

In this embodiment, each of the tool thermocouples 16 is attached to a respective receiving element 14 using a respective threaded nut (not shown in the Figures) which is screwed onto that receiving element 14. Each of the tool thermocouples 16 is attached, via an electrical wire, to a processor 22. The processor 22 is located outside the autoclave 20. This coupling of the tool thermocouples 16 to the processor 22 is such that measurements of the temperatures experienced by the tool thermocouples 16 whilst inside the autoclave 20 may be sent from the tool thermocouples 16 to the processor 22. The processor 22 is configured to store and process the received temperature measurements as described in more detail later below.

In this embodiment, each of the test pieces 18 is a relatively small (for example 15cm x 15cm) panel made of the same composite material as the aircraft panel 2.

In this embodiment, the thicknesses of the test pieces 18 (i.e. the distance between a lower surface of a test piece 18 and an upper surface of that test piece 18) may be different from one another. Preferably, the thickness of the test pieces 18 are such that, when the test pieces 18 are placed onto the mould tool 4 such that the lower surfaces of the test pieces 18 are in contact with the upper surface 8 of the support structure 6 as shown in Figure 6, the upper surfaces of the test pieces 18 define a surface that is the same as a desired upper surface (i.e. an "inner mould line") of the aircraft panel 2. In other words, the thickness of a test piece 18 located at a given location on the mould tool 4 is the same as the thickness, at that location on the mould tool 4, of the aircraft panel 2 when the aircraft panel 2 is positioned on the mould tool 4.

In this embodiment, the test pieces 18 are located at predetermined locations on the mould tool 4 that depend on the locations of certain features of the aircraft panel 2 when the aircraft panel 2 is located on the mould tool 4. In particular, for each of a plurality of features of the aircraft panel 2, a test piece 18 is located on the mould tool 4 at the location on the mould tool 4 at which that aircraft panel feature would be located if the aircraft panel 2 was placed on the mould tool 4. Examples of said aircraft panel features include, but are not limited to, the thickest part of the aircraft panel 2 and the thinnest part of the aircraft panel 2.

In this embodiment, each of the test pieces 18 comprises three thermocouples, hereinafter referred to as "test piece thermocouples" and indicated in the Figures by the reference numerals 24.

For each test piece 18, the three test piece thermocouples 24 of that test piece 18 are spaced apart within that test piece 18. In particular, in this embodiment, each test piece 18 includes a first test piece thermocouple 24 located at a lower surface of that test piece (i.e. a surface of that test piece that is in contact with the mould tool 4), a second test piece thermocouple 24 located at an upper surface of that test piece (i.e. at a surface opposite to the lower surface of that test piece 18), and a third test piece thermocouple 24 embedded in the body of the test piece 18 between the first and second test piece thermocouples 24 of that test piece 18. Preferably, the third test piece thermocouple 24 of a test piece 18 is equidistant from the first and second test piece thermocouples 24 of that test piece 18.

Each of the test piece thermocouples 24 is attached, via an electrical wire (not shown in the Figures for reasons of clarity) to the processor 22. This coupling of the test piece thermocouples 24 to the processor 22 is such that measurements of the temperatures experienced by the test piece thermocouples 24 whilst inside the autoclave 20 may be sent from the test piece thermocouples 24 to the processor 22. The processor 22 is configured to store and process the received temperature measurements as described in more detail later below.

The test pieces 18 are fixedly secured against the upper surface 8 of the support structure 6 by means of a non-permeable flexible membrane 26 which is forced against the test pieces 18 and upper surface 8 by establishing a vacuum within the chamber formed by the membrane 26 around the test pieces 18. This vacuum is established and maintained by drawing air out of the chamber via the bore 10 and a pipe 28 which is attached to the bore 10 at the lower surface 12 of the support structure 6.

Returning to the process depicted in Figure 5, at step s14, the autoclave 20 is controlled, e.g. by the processor 22, such that a cure cycle is run.

In this embodiment, the performance of the cure cycle is controlled using measurements taken by the test piece thermocouples 24 such that each test piece thermocouple 24 experiences a predetermined temperature (e.g. 180°C, 185°C, or 190°C) for a predetermined time period (for example, at least 2 hours, or for between 2 and 3 hours).

At step s16, during the running of the cure cycle, temperature measurements from the test piece thermocouples 24 and the tool thermocouples 16 are stored by the processor 22.

After the running of the cure cycle, the mould tool 4 and items attached thereto are removed from the autoclave 20 after being allowed to cool down.

At step s18, using the measurements stored at step s16, the processor 22 identifies the first test piece thermocouple 24 to reach the predetermined temperature during the cure cycle and also the last test piece thermocouple 24 to reach the predetermined temperature during the cure cycle.

The first test piece thermocouple 24 to reach the predetermined temperature during the cure cycle is hereinafter referred to as the "hottest test piece thermocouple". The last test piece thermocouple 24 to reach the predetermined temperature during the cure cycle is hereinafter referred to as the "coldest test piece thermocouple".

The hottest test piece thermocouple 24 may be the test piece thermocouple 24 that experiences the maximum heat-up rate of all the test piece thermocouples 24.

The coldest test piece thermocouple 24 may be the test piece thermocouple 24 that experiences the minimum heat-up rate of all the test piece thermocouples 24.

Typically, the hottest test piece thermocouple 24 is located at a surface of a test piece 18. Also, typically the coldest test piece thermocouple 24 is embedded in the body of a test piece 18. For example, the coldest test piece thermocouple 24 may be the third test piece thermocouple 24 of the thickest test piece 18.

At step s20, using the measurements stored at step 16, the processor 22 identifies the tool thermocouples 16 that, during the cure cycle, experienced temperature profiles that most closely match those experienced by the test piece thermocouples 24 identified at step s18.

The tool thermocouple 16 that experiences a temperature profile that most closely matches (e.g. is substantially the same as) that of the hottest test piece thermocouple 24 is hereinafter referred to as the "hottest tool thermocouple".

Also, the tool thermocouple 16 that experiences a temperature profile that most closely matches (e.g. is substantially the same as) that of the coldest test piece thermocouple 24 is hereinafter referred to as the "coldest tool thermocouple".

At step s22, the processor 22 identifies the receiving elements 14 to which the tool thermocouples identified at step s20 (i.e. the hottest and coldest tool thermocouples 16) are attached.

This identification of the receiving elements 14 to which the hottest and coldest tool thermocouples 16 are attached is used during the process of curing the aircraft panel 2, as performed at step s6 and described in more detail later below with reference to Figure 7.

At step s24, the test pieces 18 and the tool thermocouples 16 are removed from the mould tool 4.

Thus, the thermo-calibration process is provided.

Returning now to the description of step s6 of the production process, Figure 7 is a process flow chart showing certain steps of the aircraft panel moulding process performed at s6.

At step s26, a respective plurality of thermocouples is secured to each of the receiving elements 14 identified at step s22.

The thermocouples that are attached to the receiving elements 14 identified at step s22 are hereinafter referred to as "control thermocouples" as they are used to control a later performed cure process. The attachment of the control thermocouples to the receiving elements 14 is described in more detail later below with reference to Figure 8.

At step s28, the uncured aircraft panel 2 and a plurality of caul plates is secured to the upper surface 8 of the mould tool 4.

The securing of the uncured aircraft panel 2 to the mould tools 4 is described in more detail later below with reference to Figure 8.

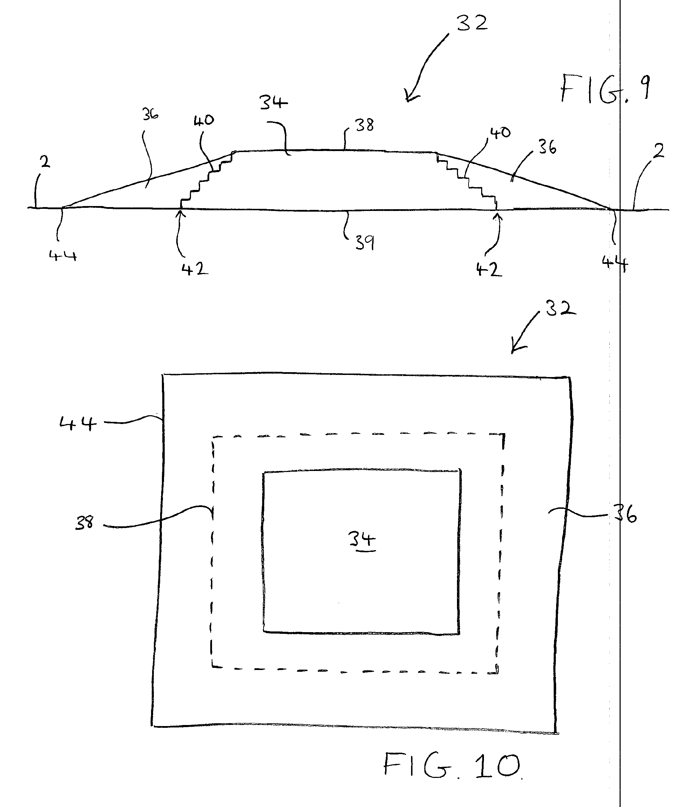

The caul plates are described in more detail later below with reference to Figures 9 and 10.

At step s30, the mould tool 4 with the control thermocouples, uncured aircraft panel 2, and caul plates attached thereto are placed into the autoclave 20.

Figure 8 is a schematic illustration (not to scale) showing the mould tool 4 with the control thermocouples 30, uncured aircraft panel 2, and caul plates 32 attached thereto in the autoclave 20.

In this embodiment, there are two control thermocouples 30 attached to each of the receiving elements 14 identified at step s22. The control thermocouples 30 are attached to the receiving elements 14 using threaded nuts (not shown in the Figures) which are screwed onto the receiving elements 14. Each of the control thermocouples 30 is attached, via an electrical wire, to the processor 22. This coupling of the control thermocouples 30 to the processor 22 is such that measurements of the temperatures experienced by the control thermocouples 30 whilst inside the autoclave 20 may be received and processed by the processor 22.

In this embodiment, the uncured aircraft panel 2 is a honeycomb core sandwich panel comprising an outer skin 2a, a honeycomb core 2b, and an inner skin 2c.

In this embodiment, the uncured aircraft panel 2 is placed on the upper surface 8 of the mould tool 4 as follows. Firstly, the outer skin 2a is arranged onto the upper surface 8 of mould tool 4. The outer skin 2a is preferably formed by a stack of prepreg sheets. The prepreg sheets preferably include interwoven carbon fibre fabric impregnated with a polymer matrix. After the outer skin 2a is arranged on the upper surface 8 of mould tool 4, the honeycomb core 2b is laid over the outer skin 22. The honeycomb core 2b may be a fiberglass over-expanded core with polyimide resin. After the honeycomb core 2b is laid over the outer skin 2c, the inner skin 2c is arranged over the honeycomb core 2b. As with the outer skin 2a, the inner skin 2c is preferably formed by a stack of prepreg sheets. Preferably, the material composition for the inner skin 2c is substantially identical to the material composition for the outer skin 2a.

The uncured aircraft panel 2 is fixedly secured against the upper surface 8 of the support structure 6 by the membrane 26. The membrane 26 is tightly drawn over the upper surface (also known as the "inner mould line") of the inner skin 2c and into intimate contact with the inner skin 2c so that the membrane 26 does not have any wrinkles. This is performed by establishing a vacuum within the chamber defined by the membrane and the uncured aircraft panel 2 via the bore 10 and pipe 28.

In this embodiment, each of the caul plates 32 is placed on top of the membrane 26 at the upper surface of the inner skin 2c (i.e. on the inner mould line). However, in other embodiments, the caul plates 32 may be arranged differently, for example, in immediate contact with a portion of the upper surface of the inner skin 2c, between the inner skin 2c and the membrane 26.

The caul plates 32 are described in more detail later below with reference to Figures 9 and 10.

The caul plates 32 advantageously tend to reduce air entrapment with the chamber between the membrane and the uncured aircraft panel 2.

Caul plates 32 may be arranged at some locations on the aircraft panel 2 so as to achieve desired stiffness in critical areas of the aircraft panel 2 and so as to prevent crushing of the honeycomb core 2b during part curing cycles. Part geometry and components determine where stiffness or compliance is required for any given composite part. In some embodiments, a caul plate 14 covers or surrounds the entire uncured aircraft panel 2 so as to reduce the likelihood of creep occurring in the honeycomb core 2b during curing.

In this embodiment, the thicknesses of the aircraft panel 2 (i.e. the distance between the upper and lower surfaces of the uncured aircraft panel 2) is such that, when the aircraft panel 2 is located on the mould tool 4 as shown in Figure 8, the upper surface of the aircraft panel 2 is located at the surface defined by the test pieces 18 during the thermo-calibration performed at step s4.

Preferably, at step s30 the mould tool 4 is placed into the autoclave 20 such that it has the same position and orientation within the autoclave 20 that it had when placed into the autoclave at step s12 of the thermo-calibration process. This advantageously tends to provide that the temperature profiles experienced by the mould tool 4 and items attached thereto during the cure cycles of the thermo-calibration and panel moulding processes are the same. The positions and orientations of the mould tool 4 with the autoclave 20 during the cure cycles may be measured using any appropriate means.

Returning to the process depicted in Figure 7, at step s32, the autoclave 20 is controlled, e.g. by the processor 22, such that the cure cycle is run.

In this embodiment, the performance of the cure cycle is controlled using measurements taken by the control thermocouples 30 such that each control thermocouple 30 experiences the predetermined temperature for the predetermined time period.

During curing, the caul plates 32 transmit normal pressure to the aircraft panel 2 so as to provide a smooth surface on the upper surface of the cured aircraft panel 2.

After the running of the cure cycle, the mould tool 4 and items attached thereto are removed from the autoclave 20 after being allowed to cool down.

At step s34, the cured aircraft panel 2 is removed from the mould tool.

Thus, the aircraft panel moulding process is provided.

In the above described method, the test piece thermocouples identified at step s18 (i.e. the so-called hottest and coldest test piece thermocouples) measure the temperatures experienced by the parts of the test pieces that, during the cure cycle, reach the predetermined temperature first and last.

The tool thermocouples identified at step s20 (i.e. the so-called hottest and coldest tool thermocouples) experience substantially the same temperature profiles as the hottest and coldest test piece thermocouples. Thus, the hottest and coldest tool thermocouples are representative of the hottest and coldest test piece thermocouples respectively. Thus, the temperature profiles of the hottest and coldest tool thermocouples are representative of the temperatures experienced by the parts of the test pieces that, during the cure cycle, reach the predetermined temperature first and last respectively.

The control thermocouples are located, on the mould tool, at the same locations as the hottest and coldest tool thermocouples. Thus, during the cure cycles, the control thermocouples tend to experience the same temperature profiles as those experienced by the hottest and coldest tool thermocouples. Thus, the temperature profiles of the control thermocouples are representative of the temperatures experienced by the parts of the test pieces that, during the cure cycle, reach the predetermined temperature first and last respectively.

The test pieces are representative of the aircraft panel. Each test piece has the same thermal properties as a portion of the aircraft panel that is located, during the aircraft panel moulding process, at the same location on the mould tool occupied by that test piece during the thermo-calibration process. Thus, the parts of the test pieces that, during the cure cycle, reach the predetermined temperature first and last tend to be representative of the parts of the aircraft panel that, during the cure cycle, reach the predetermined temperature first and last.

Thus, the temperature profiles of the control thermocouples are representative of the temperatures experienced by the parts of the aircraft panel that, during the cure cycle, reach the predetermined temperature first and last respectively. Thus, ensuring that all control thermocouple experience the predetermined temperature for the predetermined amount of time tends to advantageously ensure that all parts of the aircraft panel also experience the predetermined temperature for the predetermined amount of time, i.e. the aircraft panel is cured as desired.

Advantageously, the above described method and apparatus provide an aircraft panel moulding process in which the aircraft panel is cured as desired using only thermocouples that are external to the aircraft panel, i.e. the control thermocouples. The aircraft panel moulding process tends not to require thermocouples being attached directly to, or embedded in, the aircraft panel. This tends to reduce processing time and risk of damage to the aircraft panel which may result from the attachment to or removal from the aircraft panel of a thermocouple.

The control thermocouples and electrical wires attached thereto advantageously do not extend through the vacuum seal (e.g. the membrane) used to force the aircraft panel onto the mould surface of the mould part. This tends to reduce the risks of into the vacuum leaks and therefore tends provide a better attachment of the aircraft panel to the mould part. Also, this tends to reduce a risk of porosity within the cured aircraft panel, and therefore as risk of the cured aircraft panel being rejected.

The tool and control thermocouples are advantageously easy to couple to the mould tool using the receiving elements. This tends to reduce build time of the assemblies heated in the autoclave.

The above described method advantageously provides that tolerances at the outer mould line (i.e., the outer side of the aircraft panel) tend to be near exact. This is because the outer mould line is formed against the upper surface of the mould tool.

Furthermore, the above described method and apparatus advantageously tend to provide that the inner mould line is also produced with a high degree of accuracy. This facilitates locating and attaching details on the inner surface of the aircraft panel.

Advantageously, during the curing process, the caul plates tend to provide an increased pressure to areas of the uncured aircraft panel that may otherwise experience a relatively low pressure (e.g. due to a feature of the uncured aircraft panel).

What will now be described is a caul plate 32 used in the above described aircraft panel moulding process.

Figure 9 is a schematic illustration (not to scale) showing side view cross section of a caul plate 32 located on the upper surface of the aircraft panel 2.

Figure 10 is a schematic illustration (not to scale) showing a top down view the caul plate 32.

In this embodiment, the caul plate 32 comprises a base plate 34 and a fringe 36.

In this embodiment, the base plate 34 is made of a plurality of prepreg carbon-fibre plys (i.e. sheets of carbon fibre fabric impregnated with a polymer matrix) that have been stacked on top of one another and bonded together using a previously performed curing process.

When viewed from above, as shown in Figure 10, the base plate 34 has a square shape. When view from the side, as shown in Figure 9, the base plate 34 has a trapezium, or trapezoid, shaped cross section. The upper and lower surfaces 38, 39 of the base plate 34 are the bases of the trapezium, i.e. the parallel edges of the trapezium.

In this embodiment, as a result of the base plate 34 being made of a stack of plys, the sides of the base plate 34, i.e. the lateral sides 40 of the trapezium (i.e. the non-parallel edges of the trapezium), are stepped. However, in some embodiments, the sides 40 of the base plate 34 may be smooth.

In this embodiment, the sides 40 of the base plate 34 taper to an edge 42 at the lower surface 38 of the base plate 34.

In this embodiment, the fringe 36 is made of a synthetic rubber, i.e. a synthetic elastomer such as a fluoro-elastomer. The fringe 36 is relatively flexible whilst the base plate 34 is relatively rigid. In some embodiments, the synthetic rubber from which the fringe 36 is made may include an amount of carbon, which may be provided as pre-impregnated carbon fibre. This advantageously tends to reduce shrinkage of the fringe 36 during a cure cycle.

Preferably, the fringe 36 is made from a synthetic rubber other than a silicon rubber. This tends to reduce the likelihood of the aircraft panel being contaminated with silicon. Nevertheless, in some embodiments, for example in embodiments in which silicon contamination is not a concern, the fringe 36 may be made of a silicon rubber as silicon rubber advantageously tends to be capable of withstanding repeated thermal cycling.

The fringe 36 tapers outwards from the sides 40 of the base plate to an edge 44. In this embodiment, the fringe 36 is attached the sides 40 of the base plate 34. In particular, the fringe 36 is bonded to the base plate 34 during a curing process used to bond together the prepreg carbon-fibre plys that form the base plate 34. The fringe 36 is also cured during this curing process. A bespoke mould tool may be used in the curing process of producing the caul plate 32 to give the caul plate 32 a predetermined shape.

In use, the lower surfaces of the base plate 34 and the fringe 36 are positioned so as to exert a downward pressure on the inner mould line of the uncured aircraft panel 2.

During the cure process, the caul plate 32 is exerts downwards pressure on to the uncured aircraft panel 2. The aircraft panel 2 tends to be, at least to some extent, moulded to the lower surface 39 of the base plate 34. In this embodiment, the lower surface 39 of the base plate 34 is smooth. The smoothness and the relative rigidity of the base plate 34 advantageously tend to provide a smooth finish to the upper surface of the aircraft panel 2. Use of the base plate 34 tends to reduce the likelihood of wrinkling of the aircraft panel 2 during the curing process.

Caul plates 32 may be poisoned at predetermined locations on the uncured aircraft panel 2 so that an additional downwards force is exerted on those areas and a desired stiffness in those critical areas of the aircraft panel 2 is achieved. In this way, a lower pressure may be exerted on the uncured aircraft panel 2 by means of the vacuum, thereby reducing the risk of crushing the honeycomb core 2b during the curing cycle. A caul plate 32 may also be positioned so as to prevent or reduce creep occurring in the honeycomb core 2b during curing.

The tapered sides 40 of the base plate advantageously tend to provide that the downwards pressure exerted on the aircraft panel 2 by the base plate 34 reduces from the non-tapered portion of the base plate 34 to the base plate edge 42. This gradual reduction in pressure from the central portion of the base plate 34 to the base plate edge 42 tends to decrease the likelihood of unwanted deformation of the aircraft panel occurring at the base plate edge during the curing process.

The flexible fringe 36 provides a shallower taper than the base plate 34 alone and thereby tends to provide that the pressure exerted by the caul plate 32 on the aircraft panel 2 is more gradually reduced from the central portion of the base plate 34 to edge of the caul plate 44. This advantageously tends to reduce the likelihood of the caul plate 32 causing unwanted deformation of the aircraft panel 2 during the cure process. For example, the likelihood of an indentation to the aircraft panel 2 caused by the base plate edge 42 tends to be reduced. Furthermore, the flexibility of the fringe 36 tends to smooth the gradient of pressure exerted on the aircraft panel 2.

The flexibility of the fringe 36 tends to provide that the caul plate 32 is tolerant to tolerance mismatches in the aircraft panel 2. For example, the caul plate 32 may be placed over or against a feature of the aircraft panel 2, and the flexibility of the fringe 36 may allow the caul plate 32 to deform to some extent to account for that feature.

Apparatus, including the processor 22, for implementing the above arrangement, and performing the above described method steps, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figures 2, 5 and 7 and described above may be omitted or such process steps may be performed in differing order to that presented above and shown in the Figures. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the thermo-calibration and forming processes are used to produce an aircraft panel made of a carbon-fibre composite material. However, in other embodiments, a different object or items is produced. The object may be made of a different type of material that may undergo and heating or curing process. For example, an object may be made of a different type of composite material such as a glass-fibre composite material.

In the above embodiments, the receiving elements for receiving the thermocouples are elongate metal members that are welded to the lower surface of the mould tool support structure. However, in other embodiments, one or more of the receiving elements may be a different type of receiving element.

In the above embodiments, a thermocouple is attached to a receiving element by screwing a nut onto the threaded portions of the receiving element. However, in other embodiments, a thermocouple may be attached to a receiving element in a different manner, for example, using an adhesive.

In the above embodiments, the receiving elements are substantially uniformly spaced apart over the lower surface of the mould tool support structure. However, in other embodiments, the receiving elements may be arranged in a different manner. For example, in some embodiments, the positions of the receiving elements on the lower surface of the support structure may be dependent upon the locations, on the upper surface of the support structure, of certain features of the objects being moulded. For example, in some embodiments, receiving members may be located on the lower surface of the support structure such that they are opposite, or proximate to, certain features of the objects being moulded (such as the thickest and/or thinnest points of the object being moulded).

In the above embodiments, each of the test pieces comprises three test piece thermocouples, one located at an upper surface of that test piece, one located at a lower surface of that test piece, and one embedded within the body of that test piece between its upper and lower surfaces. However, in other embodiments, one or more of the test pieces may comprise a different number of test piece thermocouples. Also, the test piece thermocouples may be arranged in a different way to that described above.

In the above embodiments, at step s24, the tool thermocouples are removed from the mould tool. Different control thermocouples are later attached to certain receiving elements of the mould tool. However, in other embodiments, some or all of the tool thermocouples are not removed after the thermo-calibration process and may be later used as control thermocouples during the forming process.

In the above embodiments, at step s26 a plurality of control thermocouples is attached to each of the earlier identified receiving elements. However, in other embodiments only a single control thermocouple is attached to each of the earlier identified receiving elements. The use of multiple control thermocouples for each identified receiving element tends to provide redundancy.

In the above embodiments, the base plate of the caul plate is made of carbon fibre. However, in other embodiments the base plate is made of a different type of material.

In the above embodiments, the fringe of the caul plate is made of a synthetic rubber. However, in other embodiments the fringe is made of a different type of material.

In the above embodiments, the base plate of the caul plate is made by bonding together a stack of multiple layers of material. However, in other embodiments, the base plate is made using a different method.

In the above embodiments, thermocouples are used to measure temperatures. However, in other embodiments, different types of temperature measuring devices may be used.

## Claims

1. A mould tool (4) for use in a process of curing an object made of a composite material, the mould tool (4) comprising:
a tool body (6) having a first surface (8) and a second surface (12), the first surface (8) being a mould surface for receiving an object to be cured, the second surface (12) being a different surface to the first surface (8); and
a plurality of receiving elements (14) attached to the second surface (12) in a spaced apart arrangement, each receiving element (14) being configured to receive one or more temperature sensors (16, 30).

2. A mould tool (4) according to claim 1, wherein the receiving elements (14) are substantially uniformly spaced apart from one another on the second surface (12).

3. A mould tool (4) according to any of claims 1 or 2, wherein the location on the second surface (12) of at least one of receiving elements (14) corresponds to, when the object to be cured is placed on the first surface (8), the location on the first surface (8) of a predetermined feature of the object to be cured.

4. A method according to claim 3, wherein the one or more predetermined features of the object to be cured includes one or more features selected from the group of features consisting of: the thinnest part of the object to be cured, and the thickest part of the object to be cured.

5. An assembly comprising:
a mould tool (4) according to any of claims 1 to 4; and
one or more temperature sensors (16, 30) attached to one or more of the receiving elements (14).

6. A method of producing a cured object (2), the method comprising:
providing a first assembly by:
providing a first mould tool (6);
positioning one or more items (18) on a mould surface (8) of the first mould tool (6), each item (18) comprising one or more item temperature sensors (24); and
attaching, to the first mould tool (6), a plurality of tool temperature sensors (16), thereby providing the first assembly comprising the first mould tool (6), the one or more items (18) and the plurality of tool temperature sensors (16);
performing a first curing process to cure the first assembly such that each of the item temperature sensors (24) experiences a predetermined cure temperature;
measuring temperatures experienced during the first curing process by each of the item temperature sensors (24) and tool temperature sensors (16);
using the temperature measurements, identifying one or more item temperature sensors (24) that fulfil one or more predetermined criteria;
using the temperature measurements, for each identified item temperature sensor (24), identifying one or more of the tool temperature sensors (16) whose temperature profile during the first curing process most closely matches the temperature profile during the first curing process of that item temperature sensor (24);
providing a second assembly by:
providing a second mould tool (6);
positioning an object to be cured on a mould surface (8) of the second mould tool (6); and
for each identified tool temperature sensor (16), attaching, to the second mould tool (6), at a location on the second mould tool (6) corresponding to the location on the first mould tool (6) of that tool temperature sensor (16), one or more control temperature sensors (30); and
performing a second curing process to cure the second assembly such that each of the control temperature sensors (30) experiences a temperature profile dependent upon the temperature profile during the first curing process of the tool temperature sensor (16) corresponding to that control temperature sensor (30).

7. A method according to claim 6, wherein the first mould tool (6) is the same mould tool as the second mould tool (6).

8. A method according to any of claims 6 or 7, wherein the second cure cycle is performed such that each of the control temperature sensors (30) experiences a temperature profile that is substantially the same as the temperature profile during the first curing process of the tool temperature sensor (16) located on the first mould tool (6) at a position corresponding to the position on the second mould tool (6) of that control temperature sensor (30).

9. A method according to any of claims 6 to 8, wherein the step of identifying one or more item temperature sensors (24) that fulfil one or more predetermined criteria comprises identifying an item temperature sensor (24) that, during the first curing process, reaches the predetermined cure temperature last of all the item temperature sensors (24).

10. A method according to any of claims 6 to 9, wherein each item (18) has the same thermal properties as the object to be cured.

11. A caul plate (32) for placing against a surface of an object during curing of that object, the caul plate (32) comprising:
a first portion (34); and
a second portion (36); wherein
the first portion (34) is a relatively rigid member having a first surface (39) for placing against the surface of the object during curing of the object, a second surface (38) opposite to the first surface (39), and sides (40) separating the first and second surfaces (39, 38) and contiguous with the first and second surfaces (39, 38);
the second portion (36) is a relatively flexible member attached to the first portion (34) along at least part of at least one of the sides (40) of the first portion (34); and
the second portion (36) is tapered such that the thickness of the proximal part of the second portion (36) is greater than the thickness of the distal part of the second portion (36).

12. A caul plate (32) according to claim 11, wherein the first portion (34) is made of carbon fibre.

13. A caul plate (32) according to claim 11 or 12, wherein the second portion (36) is made of a synthetic elastomer comprising an amount of carbon.

14. A caul plate (32) according to any of claims 11 to 13, wherein the second portion (36) tapers to nothing at its distal part.

15. A caul plate (32) according to any of claims 11 to 14, wherein the first portion (34) is tapered such that the first surface (39) is larger than the second surface (38).
